# EUROPEAN PATENT SPECIFICATION

(11) **EP 4 043 337 B1**
(45) Date of publication and mention of the grant of the patent: **05.03.2025**
(21) Application number: 20859994.4
(22) Date of filing: 23.10.2020
(51) Int. Cl.: B64C 1/26, B64C 3/00

(54) **WING-DISMOUNTING ASSEMBLY AND AIRCRAFT**
FLÜGELDEMONTAGEANORDNUNG UND FLUGZEUG
ENSEMBLE DE DÉMONTAGE D'AILE ET AÉRONEF

(30) Priority: 05.09.2019 CN 201921474701 U
(43) Date of publication of application: 17.08.2022
(73) Proprietor: Autel Robotics Co., Ltd., Shenzhen, Guangdong 518055 (CN)
(72) Inventor: DU, Yuanyuan, Shenzhen, Guangdong 518055 (CN)
(74) Representative: Gulde & Partner
(86) International application number: PCT/CN2020/123359
(87) International publication number: WO 2021/043335

(56) References cited:
- WO-A1-2018/047187
- CN-A- 106 005 370
- CN-A- 109 436 292
- CN-A- 109 515 706
- CN-U- 206 125 394
- CN-U- 206 437 190
- CN-U- 206 984 303
- CN-U- 207 482 173
- CN-U- 207 482 173
- CN-U- 211 196 589
- US-A1- 2003 006 340
- US-A1- 2018 086 458
- US-A1- 2018 327 093

## Description

### TECHNICAL FIELD

The present application relates to the field of aerial vehicle technologies, and in particular, to a wing detachment assembly and an aerial vehicle.

### BACKGROUND

An aerial vehicle may provide people with entertainment or may perform a task for people. For example, the aerial vehicle may be used as an important tool for high-altitude photography. Generally, the aerial vehicle includes a wing and a vehicle body. The aerial vehicle may occupy a relatively large space due to such a relatively long wing. Accordingly, an aerial vehicle having a detachable wing has emerged. However, an existing solution for detaching and mounting the wing of the aerial vehicle is relatively inconvenient and requires a dedicated detachment tool.

Therefore, how to provide a solution for conveniently detaching and mounting the wing of the aerial vehicle has become a technical requirement in the related art.

A conventional wing detachment assembly is disclosed in some patent documents, for example, the patent application Pub. No. US2018/327093Al, the patent application Pub. No. CN207482173U, the patent application Pub. No. CN109515706A, and the patent application Pub. No. US2018/086458Al.

### SUMMARY

The present application is mainly intended to provide a wing detachment assembly and an aerial vehicle, to resolve an existing technical problem that a solution for detaching and mounting a wing of an aerial vehicle is relatively inconvenient.

According to a first aspect, the present application provides a wing detachment assembly as defined by the appended set of claims.

Preferably, the fastening member includes a fastening connection rod, the fastening body is disposed on one end of the fastening connection rod, and an other end of the fastening connection rod is rotatably connected to the press-fitting member.

Preferably, the fastening body is spherical or cylindrical.

Preferably, a middle portion of the press-fitting member is rotatably connected to the fastening member.

Preferably, the press-fitting member includes a press-fitting connection rod and a press-fitting handle, an end of the press-fitting connection rod being rotatably connected to the fixing base, an other end of the press-fitting connection rod being fixedly connected to the press-fitting handle and the press-fitting connection rod and the press-fitting handle being located on different straight lines.

Preferably, the mounting groove includes a groove bottom and a groove wall, the groove bottom and the groove wall being connected to form an arc surface.

Preferably, the wing detachment assembly further includes a buckling member configured to fix the press-fitting member, the buckling member fixing the press-fitting member when the fastening member is fastened in the mounting groove.

Preferably, the second connecting portion includes a connecting base and a second connecting plate, the mounting groove being provided on the connecting base, the second connecting plate being fixedly connected to the connecting base and the second connecting plate being configured to be fixed on an inner wall of a housing of the vehicle body or the wing.

When the second connecting portion is fixed on the vehicle body, the connecting base passes through the housing of the vehicle body to enable the mounting groove to be exposed from the housing of the vehicle body; or
when the second connecting portion is fixed on the wing, the connecting base passes through the housing of the wing to enable the mounting groove to be exposed from the housing of the wing.

According to a second aspect, the present application further provides an aerial vehicle. The aerial vehicle includes a vehicle body, a wing and the foregoing wing detachment assembly. The wing is detachably connected to the vehicle body by using the wing detachment assembly.

### BRIEF DESCRIPTION OF THE DRAWINGS

FIG. 1 is a schematic structural diagram of a wing detachment assembly of the present application.
FIG. 2 is a schematic structural diagram of a first connecting portion of the present application.
FIG. 3 is a schematic three-dimensional structural diagram of a first connecting plate of the present application.
FIG. 4 is a schematic structural diagram of a press-fitting member of the present application.
FIG. 5 is a schematic structural diagram of a fastening member of the present application.
FIG. 6 is a schematic structural diagram of a buckling member of the present application.
FIG. 7 is a schematic structural diagram of a second connecting portion of the present application.
FIG. 8 is a schematic structural diagram of an aerial vehicle of the present application.
FIG. 9 is an enlarged schematic structural diagram of A in FIG. 8.

### DETAILED DESCRIPTION

To make the objectives, technical solutions and advantages of the present application clearer and more comprehensible, the following further describes the present application in detail with reference to the accompanying drawings and embodiments. It is to be understood that specific embodiments described herein are merely used to describe the present application, but are not intended to limit the present application.

The terms such as "first", "second", "third" and "fourth" (if any) in this specification, claims and the accompanying drawings of the present application are used for distinguishing between similar objects and not necessarily used for describing any particular order or sequence. It is to be understood that the data used in such a way is interchangeable in proper cases, so that the embodiments described herein can be implemented in other orders other than the order illustrated or described herein. Moreover, the terms "include", "contain" and any other variation thereof are intended to cover the non-exclusive inclusion. For example, a process, method, system, product or device that includes a series of steps or units is not necessarily limited to such steps or units, but may include other steps or units not expressly listed or inherent to such a process, method, product or device.

In addition, technical solutions of various embodiments may be combined with each other, but need to be based on the technical solutions that can be implemented by a person of ordinary skill in the art. When a combination of the technical solutions is contradictory or cannot be implemented, it should be considered that such a combination of the technical solutions does not exist and does not fall within the protection scope of the present application.

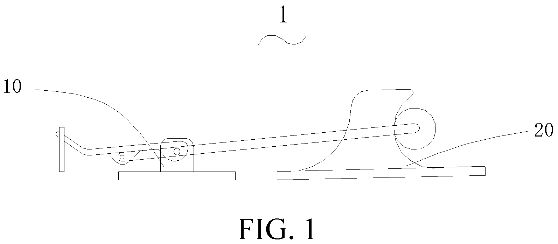

Referring to FIG. 1, the present application provides a wing detachment assembly 1 configured to detachably connect a wing of an aerial vehicle to a vehicle body of the aerial vehicle. The wing detachment assembly 1 includes a first connecting portion 10 and a second connecting portion 20. The first connecting portion 10 and the second connecting portion 20 can be quickly detached and connected. One of the first connecting portion 10 and the second connecting portion 20 is fixed to the wing and the other is fixed to the vehicle body. In this embodiment, the description is made by using an example in which the first connecting portion 10 is fixed on the vehicle body and the second connecting portion 20 is fixed on the wing.

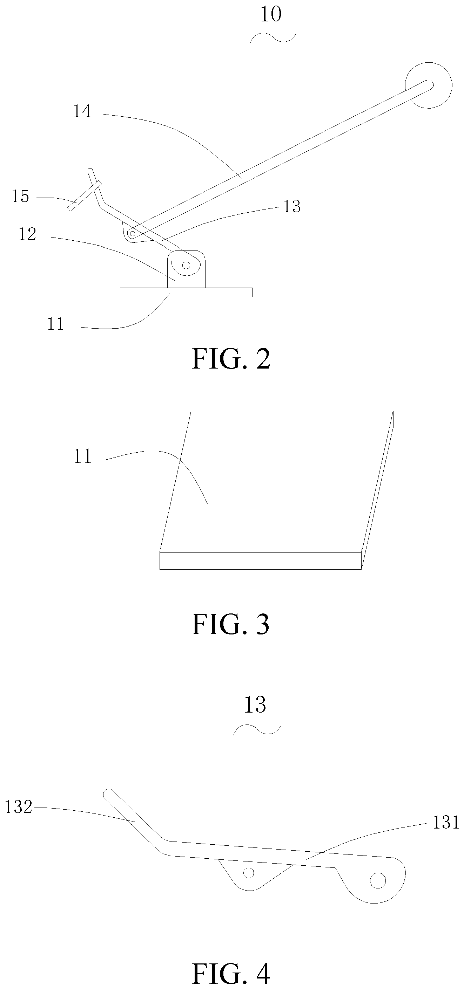

Referring to FIG. 2, the first connecting portion 10 includes a first connecting plate 11, a fixing base 12, a press-fitting member 13, a fastening member 14 and a buckling member 15. The first connecting plate 11 is fixedly connected to the fixing base 12. The press-fitting member 13 is rotatably connected to the fixing base 12. The fastening member 14 is rotatably connected to the press-fitting member 13. The first connecting plate 11 is configured to be fixed on the vehicle body. An end of the fastening member 14 is configured to be fastened to the second connecting portion 20. The press-fitting member 13 is press-fitted under the action of an external force to drive the fastening member 14 to be far away from the second connecting portion 20 as a whole. In this way, the fastening member 14 is fixed to the second connecting portion 20. The buckling member 15 is configured to be fixed to the press-fitting member 13. In other words, the press-fitting member 13 is fixed to the vehicle body, so that the connection between the first connecting portion 10 and the second connecting portion 20 is more stable. It is to be understood that the configuration of the buckling member 15 may be omitted.

Referring to FIG. 3, a shape of the first connecting plate 11 is not limited. For example, the first connecting plate 11 may be circular or quadrilateral. In this embodiment, the first connecting plate 11 is fixed on an inner wall of a housing of the vehicle body. The fixing base 12 passes through the housing of the vehicle body to be rotatably connected to the press-fitting member 13. The first connecting plate 11 is firmly fixed on the inner wall of the housing, which is not prone to falling. The first connecting plate 11 may be adhered to the inner wall of the housing of the vehicle body. An area of the first connecting plate 11 is set according to requirements. When the area of the first connecting plate 11 is large, a pressure on the housing of the vehicle body is relatively small. Therefore, the housing of the vehicle body is not necessarily configured to be excessively thick.

A specific structure for rotatably connecting the fixing base 12 and the press-fitting member 13 is not limited. For example, the connection may be implemented by using a hinge structure, a rotating shaft structure or a pin structure. The fixing base 12 and the first connecting plate 11 may be integrally formed. It is to be understood that a structure for rotatably connecting other two components is also not limited.

Referring to FIG. 2 and FIG. 4 together, an end of the press-fitting member 13 is rotatably connected to the fixing base 12 and a middle portion of the press-fitting member 13 is rotatably connected to the fastening member 14. A distance between the middle portion and the end of the press-fitting member 13 is greater than one third of a length of the press-fitting member 13. A distance between the middle portion and an other end of the press-fitting member 13 is less than two-thirds of length of the press-fitting member 13. The press-fitting member 13 includes a press-fitting connection rod 131 and a press-fitting handle 132. An end of the press-fitting connection rod 131 is rotatably connected to the fixing base 12. An other end of the press-fitting connection rod 131 is fixedly connected to the press-fitting handle 132. The press-fitting connection rod 131 and the press-fitting handle 132 are located on different straight lines. The press-fitting handle 132 helps a user apply a force to the press-fitting member 13 during detachment and mounting of the wing. The press-fitting connection rod 131 and the press-fitting handle 132 may be integrally formed.

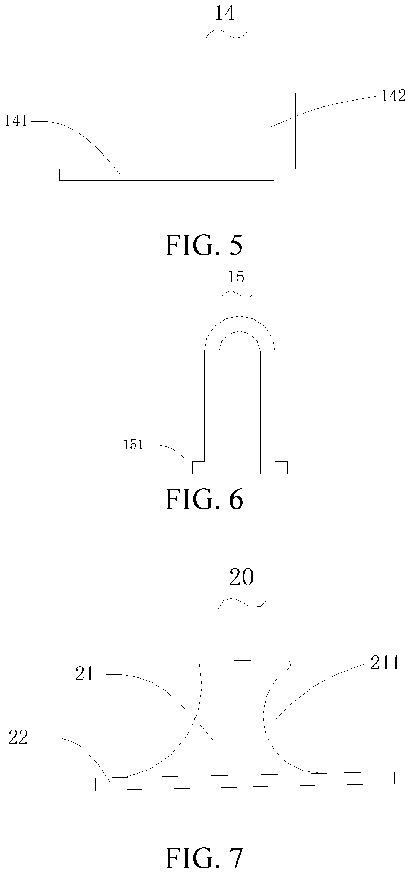

Referring to FIG. 2 and FIG. 5 together, the fastening member 14 includes a fastening connection rod 141 and a fastening body 142 disposed on one end of the fastening connection rod 141. An other end of the fastening connection rod 141 is rotatably connected to the press-fitting member 13. The fastening connection rod 141 and the fastening body 142 are located on different planes, so that the fastening body 142 can be fastened to the second connecting portion 20.

The fastening connection rod 141 is rod-shaped. A cross-sectional area of the fastening connection rod 141 is not limited. For example, the cross-sectional area may be circular or quadrilateral.

The fastening body 142 is spherical or cylindrical, which can be better in contact with the second connecting portion 20. When the fastening body 142 is cylindrical, an end portion of the cylinder is connected to a side wall of the fastening connection rod 141.

Referring to FIG. 6, the buckling member 15 is U-shaped. A middle portion of the buckling member 15 is configured to fasten the press-fitting member 13. Two ends of the buckling member 15 are configured to be fixed on the vehicle body. For example, a hole or a groove may be provided on the vehicle body for fixing. As an option, protrusions 151 are respectively disposed on outer sides of the two ends of the U-shaped buckling member 15 to be engaged with the vehicle body.

Referring to FIG. 2 and FIG. 7 together, the second connecting portion 20 includes a connecting base 21 and a second connecting plate 22. The connecting base 21 is fixedly connected to the second connecting plate 22. The second connecting plate 22 is configured to be fixed on the wing. The connecting base 21 is configured for fixing of the fastening member 14.

A shape of the second connecting plate 22 is not limited. For example, the second connecting plate 22 may be circular or quadrilateral. In this embodiment, the second connecting plate 22 is fixed on an inner wall of a housing of the wing. The connecting base 21 passes through the housing of the vehicle body to be connected to the fastening member 14. The second connecting plate 22 is firmly fixed on the inner wall of the housing of the wing, which is not prone to falling. The second connecting plate 22 may be adhered to the inner wall of the housing of the wing. An area of the second connecting plate 22 is set according to requirements. When the area of the second connecting plate 22 is large, a pressure on the housing of the wing is relatively small. Therefore, the housing of the wing is not necessarily configured to be excessively thick. It is to be understood that, the second connecting plate 22 may alternatively be fixed on an outer wall of the housing of the wing or embedded in the housing of the wing.

A mounting groove 211 is provided on the connecting base 21. A notch of the mounting groove 211 is provided away from the first connecting portion 10. The press-fitting member 13 is press-fitted to drive the fastening member 14 to be far away from the notch of the mounting groove 211 as a whole. In this way, the fastening body 142 of the fastening member 14 is fastened in the mounting groove 211. In other word, the fastening body 142 is fixed in the mounting groove 211. It is to be understood that, the configuration of the second connecting plate 22 may be omitted, so that the connecting base 21 is fixed on the wing.

The mounting groove 211 includes a groove bottom and a groove wall. The groove bottom and the groove wall are connected to form an arc surface. Therefore, the fastening body 142 may be easier to be fixed in the mounting groove 211. It is to be understood that a shape of the mounting groove 211 is not limited in the present application. For example, the mounting groove 211 may alternatively be a V-shaped groove.

During use, the first connecting plate 11 of the first connecting portion 10 is fixed on the inner wall of the housing of the vehicle body and the second connecting plate 22 of the second connecting portion 20 is fixed on the inner wall of the housing of the wing. The press-fitting member 13 is rotated and the fastening body 142 of the fastening member 14 is disposed in the mounting groove 211. Then, the press-fitting member 13 is rotated again, so that the fastening member 14 is far away from the notch of the mounting groove 211 as a whole and the fastening body 142 is pressed on the groove bottom of the mounting groove 211. The buckling member 15 fixes the press-fitting member 13 on the vehicle body when the fastening member 14 is fastened in the mounting groove 211. In this way, the wing is mounted on the vehicle body. It is to be understood that, when one aerial vehicle includes two wings, two wing detachment assemblies are required for quickly detaching each wing. It is to be understood that the wing may be detached by inversely performing the foregoing operation.

It is to be understood that, when fixing base 12 of the first connecting portion 10 is fixed on the wing and the second connecting portion 20 is fixed on the vehicle body, the first connecting plate 11 is fixed on the inner wall of the housing of the wing, the fixing base 12 passes through the housing of the wing to be rotatably connected to the press-fitting member 13 and the connecting base 21 of the second connecting portion 20 passes through the housing of the vehicle body to enable the mounting groove 211 to be exposed from the housing of the vehicle body.

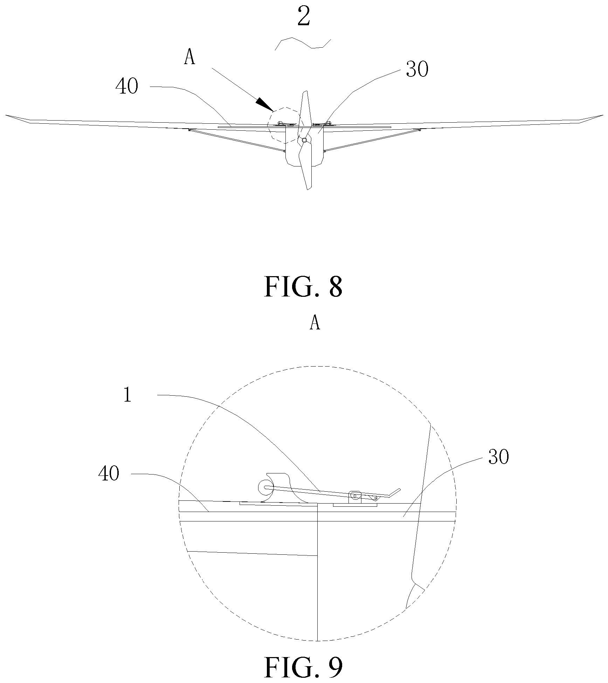

Referring to FIG. 8 and FIG. 9 together, the present application further provides an aerial vehicle 2. The aerial vehicle 2 includes a vehicle body 30, a wing 40 and the foregoing wing detachment assembly 1. The wing 40 is detachably connected to the vehicle body 30 by using the wing detachment assembly 1. The aerial vehicle 2 may be a flight device such as an unmanned aerial vehicle.

It is to be noted that, the sequence numbers of the foregoing embodiments of the present application are merely for description purpose but are not intended to indicate the preference of the embodiments. In addition, terms "comprise", "include" or any variation thereof in this specification are intended to cover non-exclusive inclusion. Therefore, a process, a device, an article or a method including a series of elements not only include such elements, but also includes other elements not listed explicitly or includes intrinsic elements for the process, the device, the article, or the method. Unless otherwise specified, an element limited by "include a/an..." does not exclude other same elements existing in the process, the device, the article, or the method including the element.

The foregoing descriptions are merely exemplary embodiments of the present application but are not intended to limit the patent scope of the present application, which is defined by the appended claims.

## Claims

1. A wing detachment assembly (1), suitable to detachably connect a wing (40) of an aerial vehicle (2) to a vehicle body (30) of the aerial vehicle (2), wherein the wing detachment assembly (1) comprises a first connecting portion (10) and a second connecting portion (20), the first connecting portion (10) comprising a fixing base (12), a press-fitting member (13) and a fastening member (14), one of the fixing base (12) and the second connecting portion (20) configured to be fixed on the wing (40) and the other configured to be fixed on the vehicle body (30);
a mounting groove (211) is provided on the second connecting portion (20), the mounting groove (211) comprising a notch distal in use from the first connecting portion (10); and
the press-fitting member (13) is rotatably connected to the fixing base (12), the fastening member (14) is rotatably connected to the press-fitting member (13), an end of the fastening member (14) is configured to engage the notch and the press-fitting member (13), when actuated, is configured to drive the rotatable connection of the fastening member (14) to the press-fitting member (13) to a position distal from the notch, such that a fastening body (142) at the end of the fastening member (14) is forced into the notch;
the first connecting portion (10) further comprises a first connecting plate (11), the first connecting plate (11) being fixedly connected to the fixing base (12);
**characterized in that**
to allow the fixing base (12) to be fixed on the vehicle body (30), the first connecting plate (11) is configured to be fixed on an inner wall of a housing of the vehicle body (30) such that the fixing base (12) passes through the housing of the vehicle body (30) to be rotatably connected to the press-fitting member (13); or
to allow the fixing base (12) to be fixed on the wing (40), the first connecting plate (11) is configured to be fixed on an inner wall of a housing of the wing (40) such that the fixing base (12) passes through the housing of the wing (40) to be rotatably connected to the press-fitting member (13).

2. The wing detachment assembly (1) according to claim 1, **characterized in that** the fastening member (14) comprises a fastening connection rod (141) and the fastening body (142) disposed on one end of the fastening connection rod (141), another end of the fastening connection rod (141) being rotatably connected to the press-fitting member (13).

3. The wing detachment assembly (1) according to claim 2, **characterized in that** the fastening body (142) is spherical or cylindrical.

4. The wing detachment assembly (1) according to claim 1, **characterized in that** a middle portion of the press-fitting member (13) is rotatably connected to the fastening member (14).

5. The wing detachment assembly (1) according to claim 1, **characterized in that** the press-fitting member (13) comprises a press-fitting connection rod (131) and a press-fitting handle (132), an end of the press-fitting connection rod (131) being rotatably connected to the fixing base (12), another end of the press-fitting connection rod (131) being fixedly connected to the press-fitting handle (132) and the press-fitting connection rod (131) and the press-fitting handle (132) being located on different straight lines.

6. The wing detachment assembly (1) according to claim 1, **characterized in that** the mounting groove (211) comprises a groove bottom and a groove wall, the groove bottom and the groove wall being connected to form an arc surface.

7. The wing detachment assembly (1) according to claim 1, **characterized in that** the wing detachment assembly (1) further comprises a buckling member (15) configured to fix the press-fitting member (13), the buckling member (15) fixing the press-fitting member (13) when the fastening member (14) is fastened in the mounting groove (211).

8. The wing detachment assembly (1) according to claim 1, **characterized in that** the second connecting portion (20) comprises a connecting base (21) and a second connecting plate (22), the mounting groove (211) being provided on the connecting base (21), the second connecting plate (22) being fixedly connected to the connecting base (21) and the second connecting plate (22) being configured to be fixed on an inner wall of a housing of the vehicle body (30) or the wing (40);
when the second connecting portion (20) is fixed on the vehicle body (30), the connecting base (21) passes through the housing of the vehicle body (30) to enable the mounting groove (211) to be exposed from the housing of the vehicle body (30); or
when the second connecting portion (20) is fixed on the wing (40), the connecting base (21) passes through the housing of the wing (40) to enable the mounting groove (211) to be exposed from the housing of the wing (40).

9. An aerial vehicle (2), comprising:
a vehicle body (30);
a wing (40); and
the wing detachment assembly (1) according to any of claims 1 to 8, the wing (40) being detachably connected to the vehicle body (30) by using the wing detachment assembly (1).

## Patentansprüche

1. Flügeldemontageanordnung (1), die zum lösbaren Verbinden eines Flügels (40) eines Luftfahrzeugs (2) mit einem Fahrzeughauptteil (30) des Luftfahrzeugs (2) geeignet ist, wobei die Flügeldemontageanordnung (1) einen ersten Verbindungsabschnitt (10) und einen zweiten Verbindungsabschnitt (20) umfasst, wobei der erste Verbindungsabschnitt (10) einen Fixiersockel (12), ein Einpresselement (13) und ein Befestigungselement (14) umfasst, wobei von dem Fixiersockel (12) und dem zweiten Verbindungsabschnitt (20) einer dazu ausgestaltet ist, am Flügel (40) fixiert zu werden, und der andere dazu ausgestaltet ist, am Fahrzeughauptteil (30) fixiert zu werden;
eine Montagenut (211) am zweiten Verbindungsabschnitt (20) vorgesehen ist, wobei die Montagenut (211) eine Kerbe umfasst, die im Gebrauch distal zum ersten Verbindungsabschnitt (10) liegt; und
das Einpresselement (13) drehbar mit dem Fixiersockel (12) verbunden ist, das Befestigungselement (14) drehbar mit dem Einpresselement (13) verbunden ist, ein Ende des Befestigungselements (14) dazu ausgestaltet ist, in die Kerbe einzugreifen, und das Einpresselement (13) dazu ausgestaltet ist, bei Betätigung die drehbare Verbindung des Befestigungselements (14) mit dem Einpresselement (13) derart in eine Position distal zur Kerbe zu bringen, dass ein Befestigungshauptteil (142) am Ende des Befestigungselements (14) in die Kerbe gedrängt wird;
der erste Verbindungsabschnitt (10) ferner eine erste Verbindungsplatte (11) umfasst, wobei die erste Verbindungsplatte (11) fest mit dem Fixiersockel (12) verbunden ist;
**dadurch gekennzeichnet, dass**
die erste Verbindungsplatte (11), damit sich der Fixiersockel (12) am Fahrzeughauptteil (30) fixieren lässt, dazu ausgestaltet ist, derart an einer Innenwand eines Gehäuses des Fahrzeughauptteils (30) fixiert zu werden, dass der Fixiersockel (12) durch das Gehäuse des Fahrzeughauptteils (30) verläuft, um drehbar mit dem Einpresselement (13) verbunden zu werden; oder
die erste Verbindungsplatte (11), damit sich der Fixiersockel (12) am Flügel (40) fixieren lässt, dazu ausgestaltet ist, derart an einer Innenwand eines Gehäuses des Flügels (40) fixiert zu werden, dass der Fixiersockel (12) durch das Gehäuse des Flügels (40) verläuft, um drehbar mit dem Einpresselement (13) verbunden zu werden.

2. Flügeldemontageanordnung (1) nach Anspruch 1, **dadurch gekennzeichnet, dass** das Befestigungselement (14) eine Befestigungs- und Verbindungsstange (141) umfasst und der Befestigungshauptteil (142) an einem Ende der Befestigungs- und Verbindungsstange (141) angeordnet ist, während ein anderes Ende der Befestigungs- und Verbindungsstange (141) drehbar mit dem Festpresselement (13) verbunden ist.

3. Flügeldemontageanordnung (1) nach Anspruch 2, **dadurch gekennzeichnet, dass** der Befestigungshauptteil (142) kugelförmig oder zylindrisch ist.

4. Flügeldemontageanordnung (1) nach Anspruch 1, **dadurch gekennzeichnet, dass** ein mittlerer Abschnitt des Festpresselements (13) drehbar mit dem Befestigungselement (14) verbunden ist.

5. Flügeldemontageanordnung (1) nach Anspruch 1, **dadurch gekennzeichnet, dass** das Einpresselement (13) eine Einpress-Verbindungsstange (131) und einen Einpressgriff (132) umfasst, wobei ein Ende der Einpress-Verbindungsstange (131) drehbar mit dem Fixiersockel (12) verbunden ist, wobei ein anderes Ende der Einpress-Verbindungsstange (131) fest mit dem Einpressgriff (132) verbunden ist und sich die Einpress-Verbindungsstange (131) und der Einpressgriff (132) auf unterschiedlichen geraden Linien befinden.

6. Flügeldemontageanordnung (1) nach Anspruch 1, **dadurch gekennzeichnet, dass** die Montagenut (211) einen Nutboden und eine Nutwand umfasst, wobei der Nutboden und die Nutwand so verbunden sind, dass sie eine Bogenfläche bilden.

7. Flügeldemontageanordnung (1) nach Anspruch 1, **dadurch gekennzeichnet, dass** die Flügeldemontageanordnung (1) ferner ein Knickelement (15) umfasst, das dazu ausgestaltet ist, das Festpresselement (13) zu fixieren, wobei das Knickelement (15) das Festpresselement (13) fixiert, wenn das Befestigungselement (14) in der Montagenut (211) befestigt ist.

8. Flügeldemontageanordnung (1) nach Anspruch 1, **dadurch gekennzeichnet, dass** der zweite Verbindungsabschnitt (20) einen Verbindungssockel (21) und eine zweite Verbindungsplatte (22) umfasst, wobei die Montagenut (211) an dem Verbindungssockel (21) vorgesehen ist, wobei die zweite Verbindungsplatte (22) fest mit dem Verbindungssockel (21) verbunden ist und die zweite Verbindungsplatte (22) dazu ausgestaltet ist, an einer Innenwand eines Gehäuses des Fahrzeughauptteils (30) oder des Flügels (40) fixiert zu werden;
der Verbindungssockel (21), wenn der zweite Verbindungsabschnitt (20) am Fahrzeughauptteil (30) fixiert ist, durch das Gehäuse des Fahrzeughauptteils (30) verläuft und so die Montagenut (211) aus dem Gehäuse des Fahrzeughauptteils (30) sichtbar werden lässt; oder
der Verbindungssockel (21), wenn der zweite Verbindungsabschnitt (20) am Flügel (40) fixiert ist, durch das Gehäuse des Flügels (40) verläuft und so die Montagenut (211) aus dem Gehäuse des Flügels (40) sichtbar werden lässt.

9. Luftfahrzeug (2), umfassend:
einen Fahrzeughauptteil (30);
einen Flügel (40); und
die Flügeldemontageanordnung (1) nach einem der Ansprüche 1 bis 8, wobei der Flügel (40) unter Verwendung der Flügeldemontageanordnung (1) lösbar mit dem Fahrzeughauptteil (30) verbunden ist.

## Revendications

1. Ensemble de démontage d'aile (1) permettant de relier de manière amovible une aile (40) d'un véhicule aérien (2) à la carrosserie (30) du véhicule aérien (2), où l'ensemble de démontage d'aile (1) comprend une première partie de liaison (10) et une seconde partie de liaison (20), la première partie de liaison (10) comprenant une base de fixation (12), un élément d'emmanchement (13) et un élément de fixation (14), la base de fixation (12) et la seconde partie de liaison (20) étant conçues pour être fixées sur l'aile (40) et la carrosserie du véhicule (30) ;
une rainure de montage (211) est prévue sur la seconde partie de liaison (20), la rainure de montage (211) comprenant une encoche distale en utilisation par rapport à la première partie de liaison (10) ; et
l'élément d'emmanchement (13) est relié de manière rotative à la base de fixation (12), l'élément de fixation (14) est relié de manière rotative à l'élément d'emmanchement (13), une extrémité de l'élément de fixation (14) est conçue pour s'engager dans l'encoche et l'élément d'emmanchement (13), lorsqu'il est actionné, est conçu pour entraîner la liaison rotative de l'élément de fixation (14) à l'élément d'emmanchement (13) vers une position distale par rapport à l'encoche, de telle sorte qu'un corps de fixation (142) situé à l'extrémité de l'élément de fixation (14) soit forcé dans l'encoche ;
la première partie de liaison (10) comprend en outre une première plaque de liaison (11), la première plaque de liaison (11) étant reliée de manière fixe à la base de fixation (12) ;
**caractérisé en ce que**
pour permettre à la base de fixation (12) d'être fixée sur la carrosserie du véhicule (30), la première plaque de liaison (11) est conçue pour être fixée sur une paroi intérieure d'un boîtier de la carrosserie du véhicule (30) de telle sorte que la base de fixation (12) traverse le boîtier de la carrosserie du véhicule (30) pour être reliée de manière rotative à l'élément d'emmanchement (13) ; ou
pour permettre à la base de fixation (12) d'être fixée sur l'aile (40), la première plaque de liaison (11) est conçue pour être fixée sur une paroi intérieure d'un boîtier de l'aile (40) de telle sorte que la base de fixation (12) traverse le boîtier de l'aile (40) pour être reliée de manière rotative à l'élément d'emmanchement (13).

2. Ensemble de démontage d'aile (1) selon la revendication 1, **caractérisé en ce que** l'élément de fixation (14) comprend une tige de liaison de fixation (141) et le corps de fixation (142) disposé sur une extrémité de la tige de liaison de fixation (141), une autre extrémité de la tige de liaison de fixation (141) étant reliée de manière rotative à l'élément d'emmanchement (13).

3. Ensemble de démontage d'aile (1) selon la revendication 2, **caractérisé en ce que** le corps de fixation (142) est sphérique ou cylindrique.

4. Ensemble de démontage d'aile (1) selon la revendication 1, **caractérisé en ce qu'**une partie centrale de l'élément d'emmanchement (13) est reliée de manière rotative à l'élément de fixation (14).

5. Ensemble de démontage d'aile (1) selon la revendication 1, **caractérisé en ce que** l'élément d'emmanchement (13) comprend une tige de liaison d'emmanchement (131) et une poignée d'emmanchement (132), une extrémité de la tige de liaison d'emmanchement (131) étant reliée de manière rotative à la base de fixation (12), une autre extrémité de la tige de liaison d'emmanchement (131) étant reliée de manière fixe à la poignée d'emmanchement (132) et la tige de liaison d'emmanchement (131) et la poignée d'emmanchement (132) étant situées sur des lignes droites différentes.

6. Ensemble de démontage d'aile (1) selon la revendication 1, **caractérisé en ce que** la rainure de montage (211) comprend un fond de rainure et une paroi de rainure, le fond de rainure et la paroi de rainure étant reliés pour former une surface en arc.

7. Ensemble de démontage d'aile (1) selon la revendication 1, **caractérisé en ce que** l'ensemble de démontage d'aile (1) comprend en outre un élément de flambage (15) conçu pour fixer l'élément d'emmanchement (13), l'élément de flambage (15) fixant l'élément d'emmanchement (13) lorsque l'élément de fixation (14) est fixé dans la rainure de montage (211).

8. Ensemble de démontage d'aile (1) selon la revendication 1, **caractérisé en ce que** la seconde partie de liaison (20) comprend une base de liaison (21) et une seconde plaque de liaison (22), la rainure de montage (211) étant prévue sur la base de liaison (21), la seconde plaque de liaison (22) étant reliée de manière fixe à la base de liaison (21) et la seconde plaque de liaison (22) étant conçue pour être fixée sur une paroi intérieure d'un boîtier de la carrosserie du véhicule (30) ou de l'aile (40) ;
lorsque la seconde partie de liaison (20) est fixée sur la carrosserie du véhicule (30), la base de liaison (21) traverse le boîtier de la carrosserie du véhicule (30) pour permettre à la rainure de montage (211) d'être exposée à partir du boîtier de la carrosserie du véhicule (30) ; ou
lorsque la seconde partie de liaison (20) est fixée sur l'aile (40), la base de liaison (21) traverse le boîtier de l'aile (40) pour permettre à la rainure de montage (211) d'être exposée à partir du boîtier de l'aile (40).

9. Véhicule aérien (2), comprenant :
une carosserie (30) ;
une aile (40) ; et
l'ensemble de démontage d'aile (1) selon l'une quelconque des revendications 1 à 8, l'aile (40) étant reliée de manière amovible à la carrosserie du véhicule (30) à l'aide de l'ensemble de démontage d'aile (1).
